# EUROPÄISCHE PATENTSCHRIFT

(11) **EP 2 135 037 B1**
(45) Veröffentlichungstag und Bekanntmachung des Hinweises auf die Patenterteilung: **05.04.2017**
(21) Anmeldenummer: 08715897.8
(22) Anmeldetag: 20.02.2008
(51) Int. Cl.: G01C 21/34

(54) **ROUTENFINDUNGSSYSTEM UND VERFAHREN MIT ROUTENOPTION ZUR VERMEIDUNG GEFÄHRLICHER ABBIEGEVORGÄNGE**
ROUTE FINDING SYSTEM AND METHOD HAVING A ROUTE OPTION FOR AVOIDING HAZARDOUS TURNING MANEUVERS
PROCÉDÉ ET SYSTÈME DE NAVIGATION ROUTIÈRE À OPTION D'ITINÉRAIRE POUR ÉVITER DES CHANGEMENTS DE DIRECTION RISQUÉS

(30) Priorität: 17.04.2007 DE 102007018084
(43) Veröffentlichungstag der Anmeldung: 23.12.2009
(73) Patentinhaber: Rohde & Schwarz GmbH & Co. KG, 81671 München (DE)
(72) Erfinder: MITTERMAIER, Werner, 85435 Erding (DE)
(74) Vertreter: Körfer, Thomas
(86) Internationale Anmeldenummer: PCT/EP2008/001327
(87) Internationale Veröffentlichungsnummer: WO 2008/125162

(56) Entgegenhaltungen:
- JP-A- 8 254 433
- JP-A- 10 325 733
- JP-A- 2007 093 451

## Beschreibung

Die Erfindung betrifft ein System und ein Verfahren zum Finden von Routen, insbesondere von Routen in Verkehrsnetzen.

Herkömmlich werden in Routenfindungssystemen die Strecke einer Teilroute und die für die Zurücklegung benötigte Zeit für die Berechnung der günstigsten Route herangezogen. In der europäischen Patentanmeldung EP 1 471 329 A2 werden zusätzliche, auf die Sicherheit der Zurücklegung bezogene Parameter zur Berechnung der günstigsten Route offenbart. Dabei wird jedoch nicht auf die unterschiedlichen Fähigkeiten der Nutzer, z.B. zum Führen eines Kraftfahrzeugs, eingegangen. Der Einfluss der Schwierigkeit einer Teilroute auf die Routenfindung ist für alle Nutzer identisch.

Das Dokument JP 10 325733 A zeigt ein anderes Routenfindungssystem, welches neben den tatsächlichen Straßenverbindungen weitere Parameter zur Auswahl der Route berücksichtigt. So wird dabei auf Stauinformationen, Fahrfähigkeiten des Nutzers und Wetterbedingung Rücksicht genommen.

Der Erfindung liegt die Aufgabe zu Grunde, ein Routenfindungssystem und ein entsprechendes Verfahren zu schaffen, das die Fähigkeiten des individuellen Nutzers zur Bewältigung von schwierigen Verkehrssituationen bei der Routenfindung berücksichtigt.

Die Aufgabe wird erfindungsgemäß durch die Vorrichtung mit den Merkmalen des unabhängigen Anspruchs 1 und das Verfahren mit den Merkmalen des unabhängigen Anspruchs 6 gelöst. Vorteilhafte Weiterbildungen sind Gegenstand der hierauf rückbezogenen Unteransprüche.

Zur Ermittlung von Routen wird ein Routenfindungssystem mit einer Kartendatenbank und einem Routen-Suchsystem eingesetzt. Die Datenbank beinhaltet Knotendaten und Kantendaten, wobei Knoten Punkte auf einer Strecke, und Kanten die Verbindungen zwischen den Knoten darstellen. Das Routen-Suchsystem bestimmt bei vorgegebenen Routen-Parametern eine optimale Route. Die Schwierigkeit der Route wird aus der Schwierigkeit der Teilrouten bestimmt, die sich aus je mindestens einer Kante zusammensetzen. Eine Teilroute gilt als schwierig, wenn die Zurücklegung schwierige Manöver erfordert. Der Einfluss der Schwierigkeit einer Route auf die Routenfindung wird durch die Fähigkeiten des Nutzers und/oder eine Nutzerwahl festgelegt.

So ist es für ungeübte oder unsichere Verkehrsteilnehmer möglich, schwierige Routen zu vermeiden. Die Verkehrssicherheit sowohl des Nutzers als auch der übrigen Verkehrsteilnehmer wird dadurch erhöht. Zur Bestimmung der Schwierigkeit von Manövern werden vorteilhafterweise sowohl statische als auch dynamische Routenparameter eingesetzt. Diese werden von dem Routen-Suchsystem bestimmt.

Durch den Einsatz statischer und dynamischer Parameter können sowohl geografische Gegebenheiten wie z.B. der Straßenverlauf als auch aktuelle Gegebenheiten wie z.B. ein eventueller Stau für die Bestimmung der Schwierigkeit einer Route herangezogen werden. Damit ist die Bestimmung der Schwierigkeit einer Route sehr genau. Die vorteilhafte Bestimmung der Position des Nutzers zur Routenfindung ermöglicht eine einfache Eingabe der gewünschten Start-Orte. Die vorteilhafte Integration des Systems in ein Fahrzeug oder ein tragbares Gerät ermöglicht eine kontinuierliche Routenfindung während der Zurücklegung der Route.

Nachfolgend wird die Erfindung anhand der Zeichnung, in der ein vorteilhaftes Ausführungsbeispiel der Erfindung dargestellt ist, beispielhaft beschrieben. In der Zeichnung zeigen:
- Fig. 1: ein beispielhaftes Linksabbiegemanöver;
- Fig. 2: eine beispielhafte Vermeidung eines Linksabbiegemanövers durch mehrere Rechtsabbiegemanöver;
- Fig. 3: einen Benutzerdialog zur Ermittlung der Fahrerfahrung des Nutzers;
- Fig. 4: einen Benutzerdialog zur Auswahl einer Routenoption;
- Fig. 5: ein beispielhaftes Linksabbiegemanöver in eine Vorfahrtstraße;
- Fig. 6: ein beispielhaftes Linksabbiegemanöver in eine Vorfahrtstraße mit Ampelanlage;
- Fig. 7: ein beispielhaftes Linksabbiegemanöver mit einer Abbiegespur;
- Fig. 8: ein beispielhaftes Linksabbiegemanöver mit einer Abbiegespur und einer Ampelanlage;
- Fig. 9: eine beispielhafte Überquerung einer Kreuzung;
- Fig. 10: eine beispielhafte Überquerung einer Kreuzung mit Ampelanlage;
- Fig. 11: ein beispielhaftes Linksabbiegemanöver mit einer Abbiegespur und starkem Verkehrsaufkommen;
- Fig. 12: ein beispielhaftes Rechtsabbiegemanöver mit einer Abbiegespur und starkem Verkehrsaufkommen;
- Fig. 13: ein Blockschaltbild eines Ausführungsbeispiels des erfindungsgemäßen Routenfindungssystems und
- Fig. 14: ein Flußdiagramm zur Veranschaulichung eines Ausführungsbeispiels des erfindungsgemäßen Verfahrens.

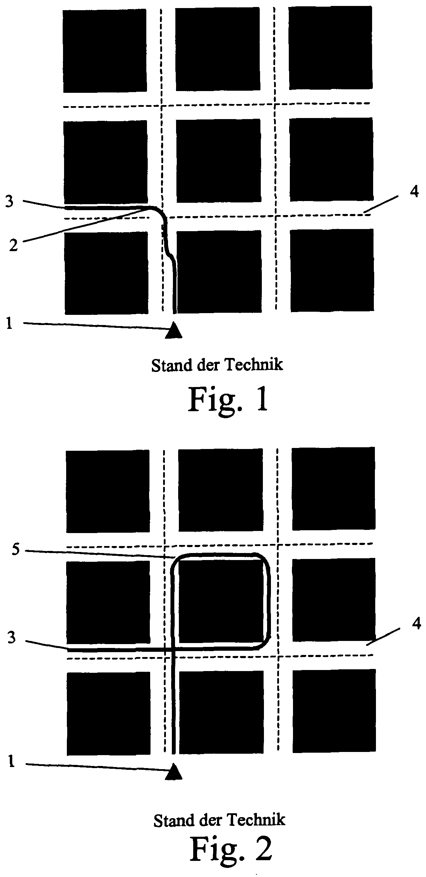

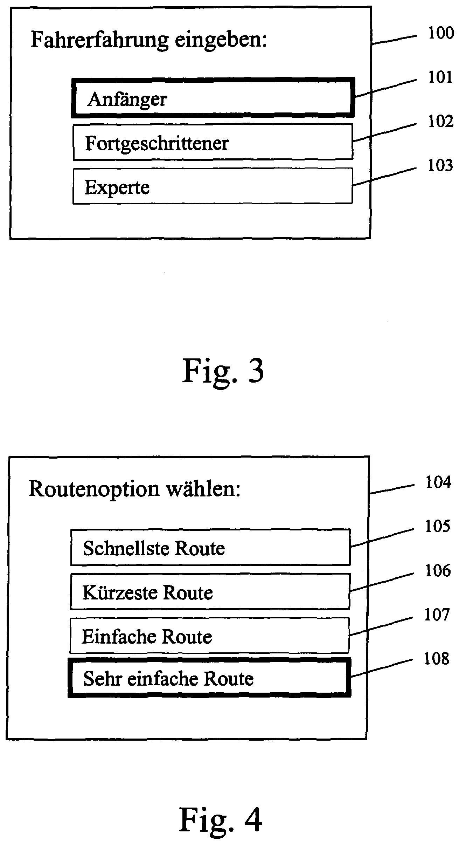

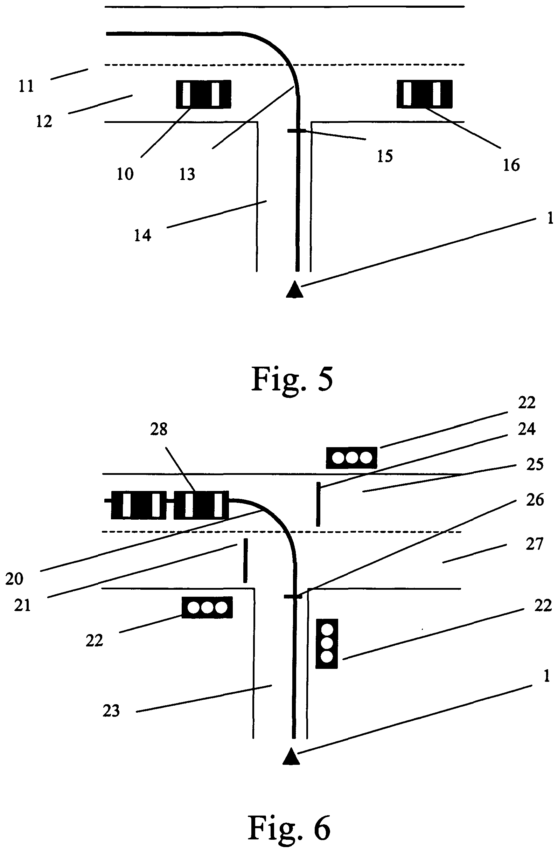

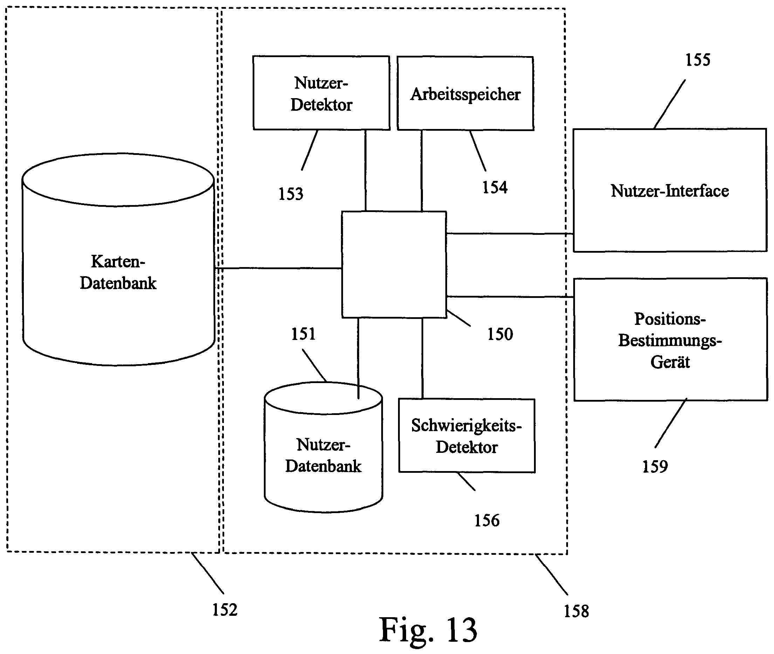

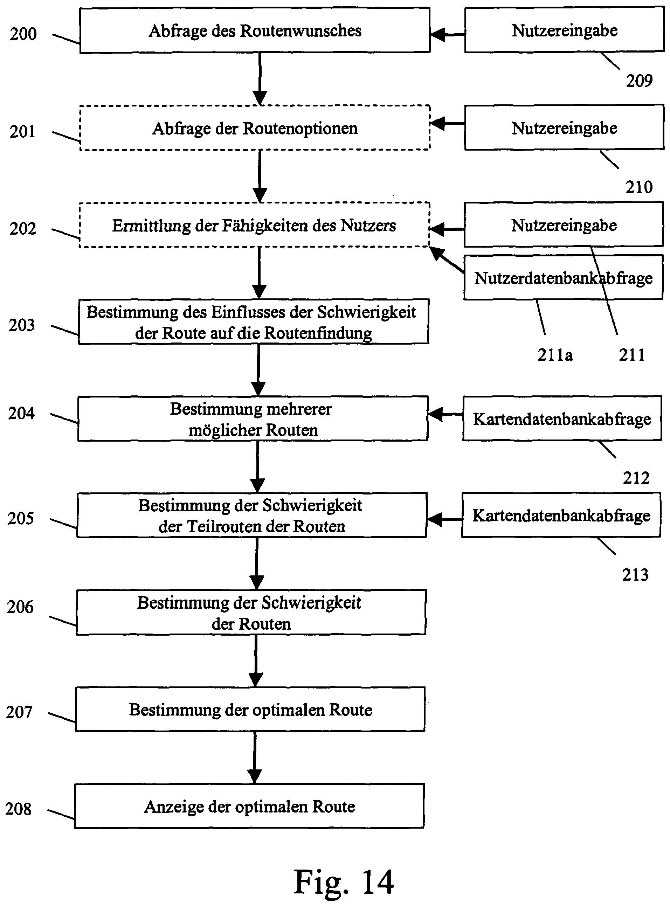

Zunächst wird anhand der Fig. 1 - 2 die generelle Problematik anhand des Standes der Technik erläutert. Anschließend wird anhand der Fig. 3 - 4 der Einfluss des Nutzers erläutert. Mittels Fig. 5 - 12 wird anhand unterschiedlicher Verkehrs-Situationen die Funktionsweise verschiedener Ausführungsbeispiele der erfindungsgemässen Vorrichtung und Methode gezeigt. Schließlich zeigt Fig. 13 ein Blockschaltbild der erfindungsgemäßen Vorrichtung und Fig. 14 ein Flussdiagramm des erfindungsgemäßen Verfahrens. Identische Elemente wurden in ähnlichen Abbildungen zum Teil nicht wiederholt dargestellt und beschrieben.

Fig. 1 zeigt einen beispielhaften Straßenverlauf in einer Draufsicht. Der Richtungsanzeiger 1 zeigt die Richtung der Zurücklegung der Strecke auf einer Straße 4 an.
Dargestellt ist ein Linksabbiegemanöver 2 an einer Kreuzung.

Fig. 2 zeigt den beispielhaften Straßenverlauf aus Fig. 1 in einer Draufsicht. Dargestellt ist eine mögliche Route zur Vermeidung eines Linksabbiegemanövers. Statt dessen wird eine Reihe von Rechtsabbiegemanövern 5 durchgeführt.

Im Folgenden wird der aus dem Stand der Technik bekannte Ansatz, Linksabbiegemanöver zu vermeiden, zum einen in einen Bezug zu den Fähigkeiten und Wünschen des Nutzers gestellt. Zum Anderen wird gezeigt, dass gezielt die Schwierigkeit einzelner Teilrouten bestimmt und davon ausgehend die Schwierigkeit der Gesamtroute bestimmt wird.

Ein beispielhafter Benutzerdialog wird in Fig. 3 gezeigt. Auf einer Anzeige 100 des erfindungsgemässen Routenfindungssystems wird der Nutzer zu seinen Fähigkeiten zum Führen von Fahrzeugen befragt. Nach einer Eingabe durch den Nutzer wird die Routenfindung unter Ausnutzung der Information zu seinen Fähigkeiten berechnet. So wird für Nutzer, welche sich als "Anfänger" 101 sehen, die Schwierigkeit einer Route sehr stark in der Routenfindung berücksichtigt. Für Nutzer, welche sich als "Fortgeschrittene" 102 sehen, wird die Schwierigkeit der Route weniger stark berücksichtigt. Die Schwierigkeit einer Route wird bei Nutzern, die sich als "Experten" 103 sehen, bei der Routenfindung nicht berücksichtigt.

In Fig. 4 wird ein beispielhafter Benutzerdialog gezeigt. Auf einer Anzeige 104 des erfindungsgemäßen Routenfindungssystems wird der Nutzer zu seinen Wünschen bezüglich der zu bestimmenden Route befragt. Es werden Routenoptionen angeboten. Neben aus dem Stand der Technik bekannten Routenoptionen, wie "kürzeste Route" 105 und "schnellste Route" 106, werden die neuen Optionen "einfache Route" 107 und "sehr einfache Route" 108 angeboten. Bei der Auswahl einer dieser neuen Routenoptionen wird die Schwierigkeit einer Route in der Routenfindung berücksichtigt. Dabei wird bei der Auswahl "einfache Route" 107 die Schwierigkeit einer Route weniger stark berücksichtigt, als bei der Auswahl "sehr einfache Route" 108.

Fig. 5 zeigt ein beispielhaftes Linksabbiegemanöver. Dabei wird von einer nicht vorfahrtberechtigten Straße 14 in eine vorfahrtberechtigte Straße 11 abgebogen. Weitere Fahrzeuge 10, 16 befinden sich auf der Gegenfahrbahn 12 der vorfahrtberechtigten Straße 11. Das Abbiegemanöver 13 überschreitet eine Haltelinie 15 bei Eintritt in die vorfahrtberechtigte Straße 11. Für die Beurteilung der Schwierigkeit des Abbiegemanövers sind in diesem Fall als statische Parameter insbesondere die Vorfahrtstraße und die Abwesenheit einer Ampelanlage entscheidend. Als dynamischer Parameter ist der Verkehr 10, 16 auf der Vorfahrtstraße 11 relevant. Insgesamt wird dem Abbiegemanöver eine mittlere Schwierigkeit zugeordnet. Bei einem Nutzer, der sich als "Anfänger" 101 sieht, oder eine "sehr einfache Route" 108 gewählt hat, könnte ein solches Manöver bereits als zu schwierig eingestuft werden, und in der Routenfindung eine alternative Route gewählt werden.

In Fig. 6 wird ein beispielhaftes Linksabbiegemanöver gezeigt. Der geplante Abbiegevorgang 20 führt von einer nicht vorfahrtberechtigten Straße 23 in eine vorfahrtberechtigte Straße 27. Der Verkehr wird durch eine Ampelanlage 22 und Haltelinien 21, 24, 26 geregelt. Auf der Spur der vorfahrtberechtigten Straße 25, welche im Rahmen des Abbiegevorgangs 20 befahren werden soll, befinden sich weitere Fahrzeuge 28. Im Gegensatz zu der in Fig. 5 gezeigten Situation wird der Verkehr hier durch eine Ampelanlage 22 geregelt. Dies erleichtert das Linksabbiegemanöver deutlich. Da sich jedoch auf dem geplanten Pfad des Linksabbiegemanövers weitere Fahrzeuge 28 befinden, wird die Schwierigkeit auf Grund einer eventuell blockierten Kreuzung erhöht. Somit ergibt sich auch in diesem Beispiel eine mittlere Schwierigkeit.

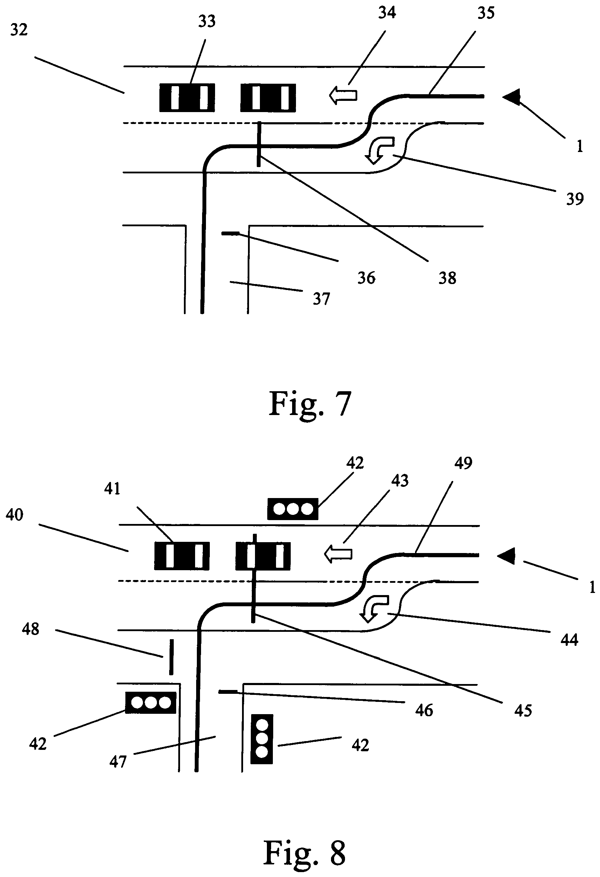

Fig. 7 zeigt ein beispielhaftes Linksabbiegemanöver. Von einer vorfahrtberechtigten Straße 32 wird in eine nicht vorfahrtberechtigte Straße 37 abgebogen. Der geplante Abbiegevorgang 35 führt über eine gesonderte Links-Abbiege-Spur 39 der vorfahrtberechtigten Straße 32. Auf der Geradeaus-Spur 34 der vorfahrtberechtigten Straße 32 befinden sich weitere Fahrzeuge 33. Der Verkehr wird im Weiteren durch Haltelinien 36, 38 geregelt. In dieser Situation sind für die Beurteilung der Schwierigkeit insbesondere die statischen Parameter Vorhandensein einer Abbiegespur und die Abwesenheit einer Ampelanlage relevant. Da potentieller Gegenverkehr gekreuzt werden muss, wird diesem Abbiegemanöver eine mittlere Schwierigkeit zugeordnet. Wie für sämtliche weitere beispielhafte Situationen wird die Schwierigkeit durch nicht dargestellte Parameter, wie die Beleuchtungssituation oder die Witterung, weiter beeinflusst.

Fig. 8 zeigt ein beispielhaftes Linksabbiegemanöver. Von einer vorfahrtberechtigten Straße 40 wird in eine nicht vorfahrtberechtigte Straße 47 abgebogen. Der geplante Abbiegevorgang 49 führt über eine gesonderte Links-Abbiege-Spur 44 der vorfahrtberechtigten Straße 40. Auf der Geradeaus-Spur 43 der vorfahrtberechtigten Straße 40 befinden sich weitere Fahrzeuge 41. Der Verkehr wird im Weiteren durch Haltelinien 45, 46, 48 und eine Ampelanlage 42 geregelt. Im Gegensatz zu der in Fig. 7 dargestellten Verkehrssituation, wird der Verkehr hier durch eine Ampelanlage 42 geregelt. Dies führt dazu, dass beim Abbiegen kein Gegenverkehr gekreuzt werden muss. Durch das Vorhandensein einer Abbiegespur wird das Manöver zusätzlich erleichtert. Somit ergibt für diese Situation eine geringe Schwierigkeit als Bewertung.

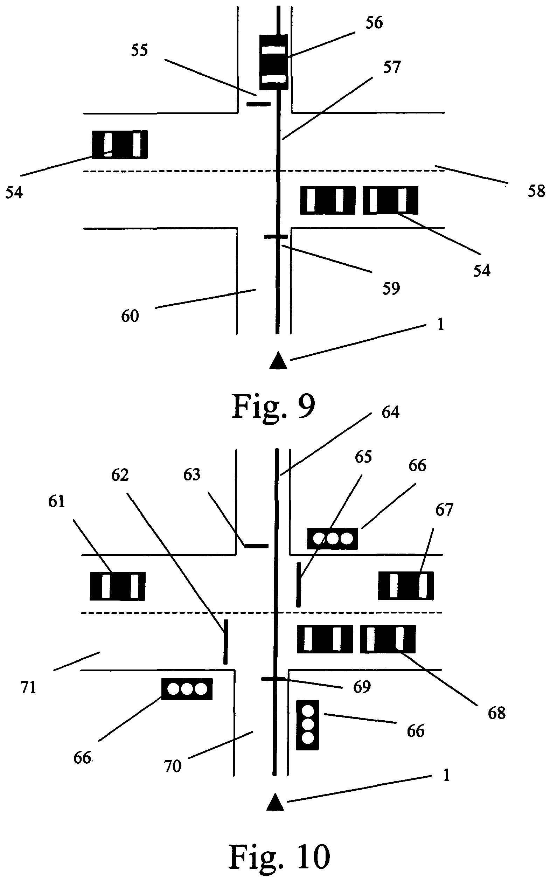

Die beispielhafte Überquerung einer Kreuzung wird in Fig. 9 dargestellt. Der geplante Kreuzungsvorgang 57 beginnt in einer nicht vorfahrtberechtigten Straße 60. Eine vorfahrtberechtigte Straße 58 wird überquert. Auf der fernen Seite der vorfahrtberechtigten Straße 58 befindet sich in der nicht vorfahrtberechtigten Straße 60 ein weiteres Fahrzeug 56. Auf der vorfahrtberechtigten Straße 58 kreuzen weitere Fahrzeuge 54. In dieser Situation sind für die Beurteilung der Schwierigkeit insbesondere die statischen Parameter Kreuzungsvorgang, die Abwesenheit einer Ampelanlage und der dynamische Parameter kreuzender Verkehr relevant. Da mehrere Fahrspuren mit kreuzendem Verkehr ohne eine Ampelanlage überquert werden müssen, wird diesem Manöver eine hohe Schwierigkeit zugeordnet.

Eine beispielhafte Überquerung einer Kreuzung mit Ampelanlage 66 wird in Fig. 10 dargestellt. Das Kreuzungsmanöver 64 beginnt in einer nicht vorfahrtberechtigten Straße 70 und überquert eine vorfahrtberechtigte Straße 71. Neben der Ampelanlage 66 wird der Verkehr durch Haltelinien 62, 63, 65, 69 geregelt. Auf der vorfahrtberechtigten Straße 71 befinden sich weitere Fahrzeuge 61, 67, 68. Im Gegensatz zu der in Fig. 9 dargestellten Situation wird hier der Verkehr durch eine Ampelanlage 66 geregelt. Dadurch wird der Einfluss des kreuzenden Verkehrs 68 beseitigt. Dem Kreuzungsmanöver wird so lediglich eine geringe Schwierigkeit zugeordnet.

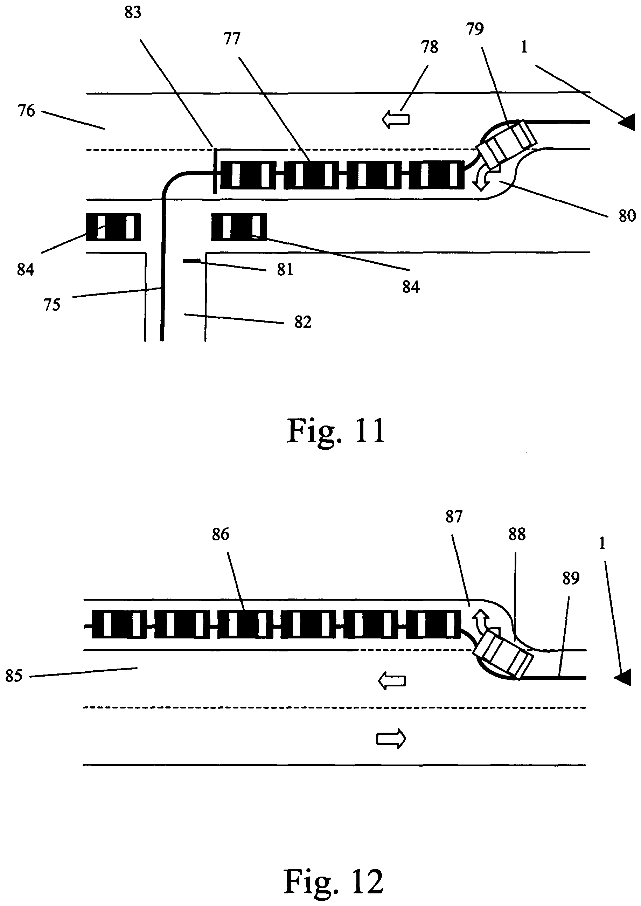

In Fig. 11 wird ein beispielhaftes Linksabbiegemanöver gezeigt. Das geplante Abbiegemanöver 75 führt über eine Abbiegespur 80 einer vorfahrtberechtigten Straße 76 in eine nicht vorfahrtberechtigte Straße 82. Auf der Abbiegespur 80 befinden sich weitere Fahrzeuge 77. Auf der Gegenfahrbahn der vorfahrtberechtigten Straße 76 befinden sich weitere Fahrzeuge 84. Die voraussichtliche Position des vom Nutzer gesteuerten Fahrzeugs 79 befindet sich am Ende der Reihe von Fahrzeugen 77 auf der Abbiegespur 80. Durch Haltelinien 81 und 83 wird der Verkehr geregelt. In dieser Situation sind für die Beurteilung der Schwierigkeit insbesondere als statische Parameter der Abbiegevorgang, die Abwesenheit einer Ampelanlage und die Anwesenheit einer Abbiegespur und als dynamische Parameter der Rückstau auf der Abbiegespur und der Verkehr auf der Gegenfahrbahn relevant. Da sich auf der Abbiegespur ein Rückstau gebildet hat, welcher den Nutzer zwingt, auf der Geradeaus-Spur zu warten, bis auf der Abbiegespur Raum für sein Fahrzeug ist, und zusätzlich in Abwesenheit einer Ampelanlage eine Fahrspur mit kreuzendem Verkehr überwunden werden muss, wird dem Abbiegemanöver eine sehr hohe Schwierigkeit zugeordnet.

Fig. 12 zeigt ein beispielhaftes Rechtsabbiegemanöver. Das geplante Abbiegemanöver 89 führt auf eine gesonderte Abbiegespur 87 der vorfahrtberechtigten Straße 85. Auf der Abbiegespur 87 befinden sich bereits weitere Fahrzeuge 86. Die voraussichtliche Position des vom Nutzer gesteuerten Fahrzeugs 88 befindet sich am Ende der Reihe von Fahrzeugen 86 auf der Abbiegespur 87.
In dieser Situation sind für die Beurteilung der Schwierigkeit insbesondere als statische Parameter der Abbiegevorgang, die Abbiegerichtung nach rechts, die Abwesenheit einer Ampelanlage und die Anwesenheit einer Abbiegespur und als dynamische Parameter der Rückstau auf der Abbiegespur relevant. Die Richtung des Abbiegemanövers nach rechts bei Anwesenheit einer Abbiegespur wird für sich als geringe Schwierigkeit bewertet. Da sich auf der Abbiegespur jedoch ein Rückstau gebildet hat, welcher den Nutzer zwingt, auf der Geradeaus-Spur zu warten bis auf der Abbiegespur Raum für sein Fahrzeug ist, wird dem Abbiegemanöver eine hohe Schwierigkeit zugeordnet.

Fig. 13 zeigt ein Blockschaltbild eines Ausführungsbeispiels des erfindungsgemäßen Routenfindungssystems. Eine Kartendatenbank 152 ist mit einem Routensuchsystem 158 verbunden. Das Routensuchsystem 158 beinhaltet eine Steuereinrichtung 150. Innerhalb des Routensuchsystems 158 sind mit der Steuereinrichtung 150 ein Nutzer-Detektor 153, ein Arbeitsspeicher 154, eine Nutzerdatenbank 151 und ein Schwierigkeits-Detektor 156 verbunden. Das Routensuchsystem 158 ist mit einem Nutzer-Interface 155 und einem Positions-Bestimmungs-Gerät 159 verbunden. Über das Nutzer-Interface 155 findet die Kommunikation mit dem Nutzer statt. Der Schwierigkeits-Detektor 156 dient der Ermittlung der Schwierigkeit der Teilrouten und Routen. In der Nutzerdatenbank 151 sind Nutzerinformationen gespeichert. Der Nutzer-Detektor 153 ermittelt den aktuellen Nutzer und erhebt Nutzer-Daten, welche in der Nutzerdatenbank 151 gespeichert werden. Die Steuereinrichtung 150 führt mit Hilfe des Arbeitsspeichers 154 die notwendigen Berechnungen zur Routenfindung durch und steuert die übrigen Komponenten. Das Positions-Bestimmungs-Gerät 159 bestimmt die Position des Nutzers und stellt diese dem Routensuchsystem 158 bereit.

In Fig. 14 wird ein Flußdiagramm zur Veranschaulichung eines Ausführungsbeispiels des erfindungsgemäßen Verfahrens gezeigt. Zunächst findet eine Abfrage des Routenwunsches 200 des Nutzers statt. Die Daten werden durch eine Nutzereingabe 209 ermittelt. In einem optionalen zweiten Schritt wird eine Abfrage der Routenoptionen 201 durchgeführt. Auch hier werden die Daten durch eine Nutzereingabe 210 ermittelt. In einem optionalen dritten Schritt 202 werden die Fähigkeiten des Nutzers ermittelt. Dies kann einerseits durch eine direkte Nutzereingabe 211 bei einem neuen Nutzer, oder durch eine Nutzerdatenbankabfrage 211a bei bekannten Nutzern geschehen. Aus den Daten zu Nutzerwunsch bzw. Nutzerfähigkeit wird in Schritt 203 der Einfluß der Schwierigkeit auf die Routenfindung ermittelt. Das Routensuchsystem 158 ermittelt daraufhin in Schritt 204 mit Hilfe eine Kartendatenbankabfrage 212 eine Mehrzahl von möglichen Routen bestehend aus einer Mehrzahl an Teilrouten. Der Schwierigkeits-Detektor 156 führt im Anschluß eine Bestimmung der Schwierigkeit der Teilrouten 205 durch. Aus den Schwierigkeiten der Teilrouten wird die Schwierigkeit der Routen in Schritt 206 berechnet. Mit Hilfe der durch den Nutzer eingegeben Routenoptionen bzw. mit Hilfe der Nutzdaten wird nun in Schritt 207 aus den möglichen Routen eine für den Nutzer optimale Route bestimmt und in Schritt 208 angezeigt.

Die Erfindung ist nicht auf das dargestellte Ausführungsbeispiel beschränkt. Wie bereits erwähnt, können jegliche Verkehrs-Situationen gegeben durch die festen Randbedingungen, wie z.B. den Straßenverlauf, wie auch dynamische Gegebenheiten, wie z.B. die Verkehrsdichte, zur Bestimmung der Schwierigkeit des Befahrens eines Streckenabschnitts herangezogen werden. Alle vorstehend beschriebenen Merkmale oder in den Figuren gezeigten Merkmale sind im Rahmen der Erfindung beliebig miteinander kombinierbar.

## Patentansprüche

1. Routenfindungssystem zum Auffinden einer Route in einem Gelände mit einer Kartendatenbank (152) des Geländes, welche Knoten-Daten und Kanten-Daten beinhaltet, wobei Knoten Punkte auf einer Strecke, und Kanten die Verbindungen zwischen den Knoten darstellen, und mit einem Routen-Suchsystem (158), welches bei vorgegebenen Routen-Parametern eine optimale Route ermittelt,
wobei eine Route aus wenigstens mehreren Teilrouten besteht,
wobei jede Teilroute aus wenigstens einer Kante besteht, wobei ein Schwierigkeits-Detektor (156) vorhanden ist, der die Schwierigkeit der Teilrouten in der Routenfindung berücksichtigt,
wobei ein Nutzer-Detektor (153) vorhanden ist, der die Fähigkeiten des Nutzers (101, 102, 103) detektiert, die den Einfluss der Schwierigkeit der Teilrouten auf die gefundene Route in der Routenfindung bestimmen und/oder eine Nutzerwahl (105, 106, 107, 108), die den Einfluss der Schwierigkeit der Teilrouten auf die gefundene Route in der Routenfindung bestimmt, und
wobei schwierige Teilrouten durch die Notwendigkeit der Durchführung schwieriger Manöver, insbesondere Abbiegemanöver und/oder Kreuzungsmanöver, zur Zurücklegung der Teilroute **gekennzeichnet sind,**
**dadurch gekennzeichnet**,
dass der Schwierigkeits-Detektor (156) in einem Routen-Suchsystem (158) schwierige Manöver anhand statischer Routenparameter und dynamischer Routenparameter bestimmt, dass der Schwierigkeits-Detektor (156) wenigstens einen der folgenden statischen Routenparameter zur Bestimmung schwieriger Manöver benutzt:
- Vorhandensein einer Ampelanlage an einem Abbiegepunkt oder einem Kreuzungspunkt;
- Vorhandensein einer Abbiegespur an einem Abbiegepunkt oder einem Kreuzungspunkt;
- Notwendigkeit eines Spurwechsels;
- Startposition des Manövers liegt in einer Vorfahrstraße;
- Zielposition des Manövers liegt in einer Vorfahrtstraße;
- Steigung der Teilroute, und
dass der Schwierigkeits-Detektor (156) wenigstens einen der folgenden dynamischen Routenparameter zur Bestimmung schwieriger Manöver benutzt:
- Vorhandensein eines Rückstaus auf wenigstens einer Spur der Straße;
- aktuelle Beleuchtungssituation;
- aktuelle Tageszeit;
- aktuelle Witterungsbedingungen.

2. Routenfindungssystem nach Anspruch 1,
**dadurch gekennzeichnet,**
**dass** der Schwierigkeits-Detektor (156) wenigstens einen der folgenden statischen Routenparameter zur Bestimmung schwieriger Manöver benutzt:
- Vorhandensein eines Abbiegevorgangs;
- Richtung eines Abbiegevorgangs;
- Winkel eines Abbiegevorgangs;
- Krümmungsradius eines Abbiegevorgangs;
- Vorhandensein eines Kreuzungsvorgangs mit einer Straße;
- Vorhandensein eines Kreuzungsvorgangs mit Bahngleisen;
- Spuranzahl am Abbiegepunkt oder Kreuzungspunkt;
- zulässige Höchstgeschwindigkeit an einem Abbiegepunkt oder einem Kreuzungspunkt;
- typische Verkehrsbelastung an einem Abbiegepunkt oder einem Kreuzungspunkt;
- Vorhandensein von Rechtsverkehr oder Linksverkehr.

3. Routenfindungssystem nach Anspruch 1 oder 2,
**dadurch gekennzeichnet,**
**dass** der Schwierigkeits-Detektor (156) wenigstens einen der folgenden dynamischen Routenparameter zur Bestimmung schwieriger Manöver benutzt:
- zulässige dynamisch festgelegte Höchstgeschwindigkeit;
- aktuelle Verkehrsbelastung;
- aktuell mögliche Höchstgeschwindigkeit.

4. Routenfindungssystem nach einem der Ansprüche 1 bis 3,
**dadurch gekennzeichnet,**
**dass** ein Positionsbestimmungs-Gerät (159), insbesondere ein "Global Positioning System"-Gerät, die aktuelle Position des Nutzers bestimmt,
wobei die aktuelle Position des Nutzers zur Routenfindung genutzt wird.

5. Routenfindungssystem nach einem der Ansprüche 1 bis 4,
**dadurch gekennzeichnet,**
**dass** das Routenfindungssystem in einem Fahrzeug oder einem tragbaren Gerät, insbesondere einem Mobiltelefon, eingebaut ist.

6. Verfahren zur Routenfindung zum Auffinden einer Route in einem Gelände, welches auf eine Kartendatenbank (152) des Geländes zugreift, in welcher Knoten-Daten und Kanten-Daten gespeichert sind, wobei Knoten Punkte auf einer Strecke, und Kanten die Verbindungen zwischen den Knoten darstellen, und welches vorgegebene Routenparameter zur Routenfindung berücksichtigt,
wobei eine Route aus mehreren Teilroute besteht,
wobei jede Teilroute aus wenigstens einer Kante besteht, wobei die Schwierigkeit der Teilrouten in der Routenfindung berücksichtigt wird,
wobei die Fähigkeiten des Nutzers (101, 102, 103) und/oder eine Nutzerwahl (105, 106, 107, 108) den Einfluss der Schwierigkeit der Teilrouten auf die gefundene Route in der Routenfindung bestimmen, und
wobei schwierige Teilrouten durch die Notwendigkeit der Durchführung schwieriger Manöver, insbesondere Abbiegemanöver und/oder Kreuzungsmanöver, zur Zurücklegung der Teilroute **gekennzeichnet sind,**
**dadurch** gekennzeichnet,
dass schwierige Manöver anhand statischer Routenparameter und dynamischer Routenparameter bestimmt werden,
dass wenigstens einer der folgenden statischen Routenparameter zur Bestimmung schwieriger Manöver genutzt wird:
- Vorhandensein einer Ampelanlage an einem Abbiegepunkt oder einem Kreuzungspunkt;
- Vorhandensein einer Abbiegespur an einem Abbiegepunkt oder einem Kreuzungspunkt;
- Notwendigkeit eines Spurwechsels;
- Startposition des Manövers liegt in einer Vorfahrstraße;
- Zielposition des Manövers liegt in einer Vorfahrtstraße;
- Steigung der Teilroute, und
dass wenigstens einer der folgenden dynamischen Routenparameter zur Bestimmung schwieriger Manöver genutzt wird:
- Vorhandensein eines Rückstaus auf wenigstens einer Spur der Straße;
- aktuelle Beleuchtungssituation;
- aktuelle Tageszeit;
- aktuelle Witterungsbedingungen.

7. Verfahren nach Anspruch 6,
**dadurch gekennzeichnet,**
**dass** die folgenden Schritte durchgeführt werden:
- Bestimmung einer Vielzahl an Routen bestehend aus einer Vielzahl an Teilrouten, welche der Zurücklegung einer Strecke von einem Startpunkt zu einem Zielpunkt dienlich sind;
- Berechnung der Schwierigkeit der Teilrouten;
- Berechnung der Schwierigkeit der Routen aus den Schwierigkeiten der Teilrouten;
- Ermittlung der optimalen Route unter Berücksichtigung der vorgegebenen Routenparameter und der Schwierigkeiten der Routen.

8. Verfahren nach Anspruch 6 oder 7,
**dadurch gekennzeichnet,**
**dass** wenigstens einer der folgenden statischen Routenparameter zur Bestimmung schwieriger Manöver genutzt werden:
- Vorhandensein eines Abbiegevorgangs;
- Richtung eines Abbiegevorgangs;
- Winkel eines Abbiegevorgangs;
- Krümmungsradius eines Abbiegevorgangs;
- Vorhandenseins eines Kreuzungsvorgangs mit einer Straße;
- Vorhandensein eines Kreuzungsvorgangs mit Bahngleisen;
- Spuranzahl am Abbiegepunkt oder Kreuzungspunkt;
- zulässige Höchstgeschwindigkeit an einem Abbiegepunkt oder einem Kreuzungspunkt;
- typische Verkehrsbelastung an einem Abbiegepunkt oder einem Kreuzungspunkt;
- Vorhandensein von Rechtsverkehr oder Linksverkehr.

9. Verfahren nach einem der Ansprüche 6 bis 8,
**dadurch gekennzeichnet,**
**dass** wenigstens einer der folgenden dynamischen Routenparameter zur Bestimmung schwieriger Manöver genutzt werden:
- zulässige dynamisch festgelegte Höchstgeschwindigkeit;
- aktuelle Verkehrsbelastung;
- aktuell mögliche Höchstgeschwindigkeit.

10. Verfahren nach einem der Ansprüche 6 bis 9,
**dadurch gekennzeichnet,**
**dass** eine aktuelle Position des Nutzers bestimmt wird, dass die aktuelle Position des Nutzers zur Routenfindung genutzt wird, und
**dass** die aktuelle Position des Nutzers durch ein Positionsbestimmungs-Gerät (159), insbesondere ein "Global Positioning System"-Gerät, bestimmt wird.

11. Verfahren nach einem der Ansprüche 6 bis 10,
**dadurch gekennzeichnet,**
**dass** das Verfahren durch ein, in ein Fahrzeug integriertes Gerät oder ein tragbares Gerät, insbesondere ein Mobiltelefon, durchgeführt wird.

## Claims

1. A route-finding system for locating a route within a terrain with a map databank (152) of the terrain, which contains node data and edge data, wherein nodes represent points on a path, and edges represent the connections between the nodes, and with a route search system (158), which, with specified route parameters, determines an optimal route,
wherein a route consists of at least several sub-routes,
wherein each sub-route consists of at least one edge,
wherein a difficulty detector (156) is present, which takes the difficulty of the sub-routes into consideration in the route finding,
wherein a user detector (153) is present, which detects the skills of the user (101, 102, 103), which determine the influence of the difficulty of the sub-routes on the found route in the route finding, and/or a user selection (105, 106, 107, 108), which determines the influence of the difficulty of the sub-routes on the found route in the route finding, and
wherein difficult sub-routes are **characterised by** the need to implement difficult manoeuvres, in particular, turn manoeuvres and/or crossing manoeuvres, in order to travel the sub-route,
**characterised in that** the difficulty detector (156) in a route search system (158) determines difficult manoeuvres on the basis of static route parameters and dynamic route parameters,
that the difficulty detector (156) uses at least one of the following static route parameters for the determination of difficult manoeuvres:
- presence of traffic lights at a turning point or a crossing point;
- presence of a turning lane at a turning point or a crossing point;
- need for a change of lane;
- starting position of the manoeuvre is disposed in a road with right of way;
- destination position of the manoeuvre is disposed in a road with right of way;
- gradient of the sub-route, and
that the difficulty detector (156) uses at least one of the following dynamic route parameters for the determination of difficult manoeuvres:
- presence of a tailback on at least one lane of the road;
- current lighting situation;
- current time of day;
- current weather conditions.

2. The route-finding system according to claim 1,
**characterised in that**
the difficulty detector (156) uses at least one of the following static route parameters for the determination of difficult manoeuvres:
- presence of a turn manoeuvre;
- direction of a turn manoeuvre;
- angle of a turn manoeuvre;
- radius of curvature of a turn manoeuvre;
- presence of a crossing manoeuvre with a road;
- presence of a crossing manoeuvre with railway lines;
- number of lanes at the turning point or crossing point;
- permitted maximum speed at a turning point or crossing point;
- typical traffic volume at a turning point or crossing point;
- presence of right-hand traffic or left-hand traffic.

3. The route-finding system according to claim 1 or 2,
**characterised in that**
the difficulty detector (156) uses at least one of the following dynamic route parameters for the determination of difficult manoeuvres:
- permitted dynamically determined maximum speed;
- current traffic volume;
- currently possible maximum speed.

4. The route-finding system according to any one of claims 1 to 3,
**characterised in that**
a positioning device (159), in particular, a "Global Positioning System" device, determines the user's current position,
wherein the user's current position is used for the route finding.

5. The route-finding system according to any one of claims 1 to 4,
**characterised in that**
the route-finding system is built into a vehicle or a portable device, in particular, a mobile telephone.

6. A method for route finding for locating a route within a terrain, which accesses a map databank (152) of the terrain, in which node data and edge data are stored, wherein nodes represent points on a path, and edges represent the connections between the nodes, and which takes specified route parameters into consideration for the route finding,
wherein a route consists of several sub-routes,
wherein each sub-route consists of at least one edge,
wherein the difficulty of the sub-routes is taken into consideration in the route finding,
wherein the user's skills (101, 102, 103) and/or a user selection (105, 106, 107, 108) determine the influence of the difficulty of the sub-routes on the found route in the route finding, and
wherein difficult sub-routes are **characterised by** the need to implement difficult manoeuvres, in particular, turn manoeuvres and/or crossing manoeuvres, in order to travel the sub-route,
**characterised in that** difficult manoeuvres are determined on the basis of static route parameters and dynamic route parameters,
that at least one of the following static route parameters is used for the determination of difficult manoeuvres:
- presence of traffic lights at a turning point or a crossing point;
- presence of a turning lane at a turning point or a crossing point;
- need for a change of lane;
- starting position of the manoeuvre is disposed in a road with right of way;
- destination position of the manoeuvre is disposed in a road with right of way;
- gradient of the sub-route, and
that at least one of the following dynamic route parameters is used for the determination of difficult manoeuvres:
- presence of a tailback on at least one lane of the road;
- current lighting situation;
- current time of day;
- current weather conditions.

7. The method according to claim 6,
**characterised in that**
the following stages are implemented:
- determination of a plurality of routes consisting of a plurality of sub-routes, which are used for travelling a path from a starting point to a destination point;
- calculation of the difficulty of the sub-routes;
- calculation of the difficulty of the routes from the difficulties of the sub-routes;
- determination of the optimal route taking into consideration the specified route parameters and the difficulties of the routes.

8. The method according to claim 6 or 7,
**characterised in that**
at least one of the following static route parameters is used for the determination of difficult manoeuvres:
- presence of a turn manoeuvre;
- direction of a turn manoeuvre;
- angle of a turn manoeuvre;
- radius of curvature of a turn manoeuvre;
- presence of a crossing manoeuvre with a road;
- presence of a crossing manoeuvre with railway lines;
- number of lanes at the turning point or crossing point;
- permitted maximum speed at a turning point or a crossing point;
- typical traffic volume at a turning point or a crossing point;
- presence of right-hand traffic or left-hand traffic.

9. The method according to any one of claims 6 to 8,
**characterised in that**
at least one of the following dynamic route parameters is used for the determination of difficult manoeuvres:
- permitted dynamically determined maximum speed;
- current traffic volume;
- currently possible maximum speed.

10. The method according to any one of claims 6 to 9,
**characterised in that**
a current position of the user is determined,
that the user's current position is used for the route finding, and
that the user's current position is determined by a positioning device (159), in particular, a "Global Positioning System" device.

11. The method according to any one of claims 6 to 10,
**characterised in that**
the method is implemented by a device integrated into a vehicle or a portable device, in particular, a mobile telephone.

## Revendications

1. Système de navigation routière destiné à trouver un itinéraire dans une zone de terrain, comprenant une banque de données cartographiques (152) de la zone de terrain, qui contient des données de noeud et des données d'arête, les noeuds représentant des points sur un parcours et les arêtes les liaisons entre les noeuds, et comprenant un système de recherche d'itinéraire (158), qui détermine, pour des paramètres d'itinéraire prescrits, un itinéraire optimal, système dans lequel un itinéraire est constitué d'au moins plusieurs itinéraires partiels,
dans lequel chaque itinéraire partiel est constitué d'au moins une arête,
dans lequel il est prévu un détecteur de difficultés (156), qui prend en considération la difficulté des itinéraires partiels dans la navigation,
dans lequel il est prévu un détecteur d'utilisateur (153) détectant les capacités de l'utilisateur (101, 102, 103), qui déterminent l'influence de la difficulté des itinéraires partiels sur l'itinéraire trouvé par la navigation, et/ou un choix d'utilisateur (105, 106, 107, 108), qui détermine l'influence de la difficulté des itinéraires partiels sur l'itinéraire trouvé par la navigation, et
dans lequel les itinéraires partiels difficiles sont **caractérisés par** la nécessité de l'exécution de manoeuvres difficiles, notamment des manoeuvres de changement de direction et/ou des manoeuvres de croisement, pour parcourir l'itinéraire partiel,
**caractérisé**
**en ce que** le détecteur de difficulté (156) dans un système de recherche d'itinéraire (158) détermine des manoeuvres difficiles à l'aide de paramètres d'itinéraire statiques et de paramètres d'itinéraires dynamiques,
**en ce que** le détecteur de difficulté (156) utilise au moins l'un des paramètres d'itinéraire statiques suivants pour la détermination de manoeuvres difficiles :
- la présence d'un ensemble de feux de signalisation au niveau d'un point de changement de direction ou d'un point de croisement ;
- la présence d'une file de changement de direction au niveau d'un point de changement de direction ou d'un point de croisement ;
- la nécessité d'un changement de file ;
- la position de départ de la manoeuvre se situe sur une route prioritaire ;
- la position d'arrivée de la manoeuvre se situe sur une route prioritaire ;
- la pente de l'itinéraire partiel, et
**en ce que** le détecteur de difficulté (156) utilise au moins l'un des paramètres d'itinéraire dynamiques suivants pour la détermination de manoeuvres difficiles :
- la présence d'un bouchon sur au moins une file de la route ;
- la situation d'éclairage actuelle ;
- l'heure actuelle de la journée ;
- les conditions météorologiques actuelles.

2. Système de navigation routière selon la revendication 1,
**caractérisé**
**en ce que** le détecteur de difficulté (156) utilise au moins l'un des paramètres d'itinéraire statiques suivants pour la détermination de manoeuvres difficiles :
- la présence d'une phase de changement de direction ;
- la direction d'une phase de changement de direction ;
- l'angle d'une phase de changement de direction ;
- le rayon de courbure d'une phase de changement de direction ;
- la présence d'une phase de croisement avec une route ;
- la présence d'une phase de croisement avec des voies de chemin de fer ;
- le nombre de files au point de changement de direction ou au point de croisement ;
- la vitesse maximale admise au niveau d'un point de changement de direction ou d'un point de croisement ;
- une intensité de trafic typique au niveau d'un point de changement de direction ou d'un point de croisement ;
- la présence de circulation à droite ou de circulation à gauche.

3. Système de navigation routière selon la revendication 1 ou la revendication 2,
**caractérisé**
**en ce que** le détecteur de difficulté (156) utilise au moins l'un des paramètres d'itinéraire dynamiques suivants pour la détermination de manoeuvres difficiles :
- la vitesse maximale admise définie sur le plan dynamique ;
- l'intensité actuelle du trafic ;
- la vitesse maximale actuellement possible.

4. Système de navigation routière selon l'une des revendications 1 à 3,
**caractérisé**
**en ce qu'**un appareil de détermination de position dit de géolocalisation (159), notamment un appareil GPS (Global Positioning System), détermine la position actuelle de l'utilisateur,
la position actuelle de l'utilisateur étant mise à profit pour la navigation routière.

5. Système de navigation routière selon l'une des revendications 1 à 4,
**caractérisé**
**en ce que** le système de navigation routière est implanté dans un véhicule ou dans un appareil portable, notamment un téléphone mobile.

6. Procédé de navigation routière destiné à trouver un itinéraire dans une zone de terrain, procédé qui à cet effet accède à une banque de données cartographiques (152) de la zone de terrain, dans laquelle sont mémorisées des données de noeud et des données d'arête, les noeuds représentant des points sur un parcours et les arêtes les liaisons entre les noeuds, et qui prend en considération des paramètres d'itinéraire prescrits pour la navigation, procédé
d'après lequel un itinéraire est constitué de plusieurs itinéraires partiels,
d'après lequel chaque itinéraire partiel est constitué d'au moins une arête,
d'après lequel on prend en considération la difficulté des itinéraires partiels dans la navigation,
d'après lequel les capacités de l'utilisateur (101, 102, 103) et/ou un choix d'utilisateur (105, 106, 107, 108) déterminent l'influence de la difficulté des itinéraires partiels sur l'itinéraire trouvé par la navigation, et d'après lequel les itinéraires partiels difficiles sont **caractérisés par** la nécessité de l'exécution de manoeuvres difficiles, notamment des manoeuvres de changement de direction et/ou des manoeuvres de croisement, pour parcourir l'itinéraire partiel,
**caractérisé**
**en ce que** l'on détermine des manoeuvres difficiles à l'aide de paramètres d'itinéraire statiques et de paramètres d'itinéraires dynamiques,
**en ce que** l'on utilise au moins l'un des paramètres d'itinéraire statiques suivants pour la détermination de manoeuvres difficiles :
- la présence d'un ensemble de feux de signalisation au niveau d'un point de changement de direction ou d'un point de croisement ;
- la présence d'une file de changement de direction au niveau d'un point de changement de direction ou d'un point de croisement ;
- la nécessité d'un changement de file ;
- la position de départ de la manoeuvre se situe sur une route prioritaire ;
- la position d'arrivée de la manoeuvre se situe sur une route prioritaire ;
- la pente de l'itinéraire partiel, et
**en ce que** l'on utilise au moins l'un des paramètres d'itinéraire dynamiques suivants pour la détermination de manoeuvres difficiles :
- la présence d'un bouchon sur au moins une file de la route ;
- la situation d'éclairage actuelle ;
- l'heure actuelle de la journée ;
- les conditions météorologiques actuelles.

7. Procédé selon la revendication 6,
**caractérisé**
**en ce que** l'on effectue les étapes suivantes :
- la détermination d'une pluralité d'itinéraires constitués d'une pluralité d'itinéraires partiels, qui peuvent servir à effectuer un parcours entre un point de départ et un point d'arrivée ;
- le calcul de la difficulté des itinéraires partiels ;
- le calcul de la difficulté des itinéraires à partir des difficultés des itinéraires partiels ;
- la détermination de l'itinéraire optimal en tenant compte des paramètres d'itinéraire prescrits et des difficultés des itinéraires.

8. Procédé selon la revendication 6 ou la revendication 7,
**caractérisé**
**en ce que** l'on utilise au moins l'un des paramètres d'itinéraire statiques suivants pour la détermination de manoeuvres difficiles :
- la présence d'une phase de changement de direction ;
- la direction d'une phase de changement de direction ;
- l'angle d'une phase de changement de direction ;
- le rayon de courbure d'une phase de changement de direction ;
- la présence d'une phase de croisement avec une route ;
- la présence d'une phase de croisement avec des voies de chemin de fer ;
- le nombre de files au point de changement de direction ou au point de croisement ;
- la vitesse maximale admise au niveau d'un point de changement de direction ou d'un point de croisement ;
- une intensité de trafic typique au niveau d'un point de changement de direction ou d'un point de croisement ;
- la présence de circulation à droite ou de circulation à gauche.

9. Procédé selon l'une des revendications 6 à 8,
**caractérisé**
**en ce que** l'on utilise au moins l'un des paramètres d'itinéraire dynamiques suivants pour la détermination de manoeuvres difficiles :
- la vitesse maximale admise définie sur le plan dynamique ;
- l'intensité actuelle du trafic ;
- la vitesse maximale actuellement possible.

10. Procédé selon l'une des revendications 6 à 9,
**caractérisé**
**en ce que** l'on détermine une position actuelle de l'utilisateur,
**en ce que** l'on utilise la position actuelle de l'utilisateur pour la navigation, et
**en ce que** la position actuelle de l'utilisateur est déterminée par un appareil de détermination de position dit de géolocalisation (159), notamment un appareil GPS (Global Positioning System).

11. Procédé selon l'une des revendications 6 à 10,
**caractérisé**
**en ce que** le procédé est exécuté par un appareil intégré à un véhicule ou par un appareil portable, notamment un téléphone mobile.
